Europäisches Patentamt

European Patent Office

Office européen des brevets

(19)

(11) Numéro de publication: **0 173 383**
**B1**

(12) **FASCICULE DE BREVET EUROPEEN**

(45) Date de publication du fascicule du brevet: **18.04.90**

(21) Numéro de dépôt: **85201271.5**

(22) Date de dépôt: **06.08.85**

(51) Int. Cl.⁵: **G 06 F 7/48,** G 06 F 9/30,
G 06 F 7/544, G 06 F 7/52

(54) **Processeur pour effectuer suivant différents modes le traitement de données et dispositif de multiplication convenant pour un tel processeur.**

(30) Priorité: **14.08.84 FR 8412799**
**14.08.84 FR 8412801**

(43) Date de publication de la demande:
**05.03.86 Bulletin 86/10**

(45) Mention de la délivrance du brevet:
**18.04.90 Bulletin 90/16**

(84) Etats contractants désignés:
**BE CH DE FR GB IT LI NL SE**

(56) Documents cités:
**EP-A-0 051 422**
**WO-A-80/01423**

**WESCON TECHNICAL PAPER, vol. 26, septembre 1982, session 34/1, pages 1-10, North Hollywood, US; Dr. G.P. EDWARDS: "The AMI S28211 advanced signal processing peripheral"**

(73) Titulaire: **TELECOMMUNICATIONS RADIOELECTRIQUES ET TELEPHONIQUES T.R.T.**
**88, rue Brillat Savarin**
**F-75013 Paris (FR)**

(72) Inventeur: **Mary, Luc**
**SOCIETE CIVILE S.P.I.D. 209 rue de l'Université**
**F-75007 Paris (FR)**
Inventeur: **Barazesh, Bahman**
**SOCIETE CIVILE S.P.I.D. 209 rue de l'Université**
**F-75007 Paris (FR)**

(74) Mandataire: **Chaffraix, Jean et al**
**Société Civile S.P.I.D. 209, rue de l'Université**
**F-75007 Paris (FR)**

(56) Documents cités:
**IBM TECHNICAL DISCLOSURE BULLETIN, vol. 27, no. 1A, juin 1984, pages 104-107, New York, US; J.W. CANNON et al.: "Effective utilization of a two-port array"**

Courier Press, Leamington Spa, England.

EP 0 173 383 B1

56 Documents cités:

PROCEEDINGS OF THE IEEE, vol. 72, no. 1,
janvier 1984, pages 113-123, IEEE, New York,
US; H.F. JORDAN: "Experience with pipelined
multiple instruction streams"

ELECTRONIC DESIGN, vol. 32, no. 10, 17 mai
1984, pages 135-144, Waseca, MN, Denville,
New York, US; D. GARDE et al.: "CMOS signal
processors push to highest throughput of all"

ELECTRONICS INTERNATIONAL, vol. 57, no. 14,
12 juillet 1984, pages 99-103, New York, US; F.
WARE et al.: "Fast 64-bit chip set gangs up for
double-precision floating-point work"

Electronics, 10 Feb. 1982, p. 149-152, F.Ware:
C-Mos chip set streamlines floating-point
processing

# EP 0 173 383 B1

**Description**

La présente invention concerne un processeur pour effectuer le traitement de données suivant plusieurs modes, processeur comportant:

— une mémoire programme pour contenir un ensemble d'instructions parmi lesquelles se trouvent des instructions de déclaration de mode et dans lesquelles est prévu un emplacement pour un code opératoire,

— un registre d'instructions pour contenir les instructions provenant de la mémoire programme,

— une ligne commune d'instructions connectée en sortie du registre d'instructions,

— une unité arithmétique et logique munie de deux entrées d'opérande, d'une entrée de commande pour recevoir des mots de commande notamment un premier mot de commande correspondant à une addition des opérandes à ses entrées et un deuxième mot de commande correspondant à une soustraction des opérandes à ses entrées,

— un circuit de mode connecté à la ligne commune d'instructions pour détecter les instructions de déclaration de mode et pour engendrer des signaux de mode,

— un circuit d'horloge pour engendrer des signaux de phase de traitement en fonction des signaux de mode pour que le traitement de données suivant soit exécuté dans le mode préalablement déclaré,

— un circuit de gestion de commande et de retenue pour fournir à l'entrée de commande de l'unité des mots de commande en fonction des codes opératoires et du mode déclaré.

Un tel processeur est décrit dans la demande de brevet international WO 80/01423. Ce processeur peut traiter des données selon plusieurs modes, ces modes consistant à traiter des mots de longueur variable et ce processeur est mal adapté à traiter des données dans le mode complexe.

Dans le document suivant: Electronic Design, vol. 32, N° 10, 17 mai 1984, pages 135—144, New-York, US de D. GARDE et al., intitulé "CMOS Signal Processors Push to Highest Through-out of All", on décrit des éléments de circuit permettant de concevoir un processeur fonctionnant dans le mode complexe.

Les processeurs du genre cité dans le dernier document trouvent d'importantes applications. Une de ces applications particulièrement visée est la transmission de données par porteuse en quadrature, c'est-à-dire que les données sont considérées comme des grandeurs complexes avec une partie réelle et une partie imaginaire, ce qui n-exclut pas que le traitement peut être aussi effectué sur des données réelles en simple et même en double précision.

La présente invention propose un tel processeur.

Pour cela un tel processeur est remarquable en ce qu'il est prévu un code opératoire pour effectuer en mode complexe l'opération addition conjuguée relative à deux données A et B pour fournir une partie réelle:

$$Re(A) + Re(B)$$

et un partie imaginaire:

$$Im(A) - Im(B)$$

et en ce que le circuit de gestion comporte des moyens déclenchés par le code opératoire addition conjuguée pour engendrer dans une phase de traitement l'un des premier et deuxième mots de commande et dans une autre phase l'autre des premier et deuxième mots.

La description suivante, accompagnée des dessins annexés, le tout donné à titre d'exemple non limitatif, fera bien comprendre comment l'invention peut être réalisée.

La figure 1 est un schéma d'un processeur conforme à l'invention.

La figure 2 représente le format d'instructions utilisées pour le processeur de la figure 1.

Les figures 3a et 3b représentent l'allure des signaux de phases.

La figure 4 représente le schéma des circuits d'adressage faisant partie du processeur de la figure 1.

La figure 5 représente le format d'autres instructions utilisées pour le processeur de la figure 1.

La figure 6 représente le schéma d'un circuit de gestion de commande faisant partie du processeur de la figure 1.

La figure 7 représente le registre de statut ainsi que son circuit de gestion, le tout faisant partie du processeur de la figure 1.

La figure 8 représente un diagramme-temps destiné à l'explication du fonctionnement du processeur de la figure 1.

La figure 9 représente en variante un processeur avec un dispositif de multiplication, le tout conforme à l'invention.

La figure 10 représente le schéma du dispositif de multiplication conforme à l'invention.

La figure 11 représente le format d'une instruction impliquant une multiplication à exécuter.

La figure 12 est un diagramme-temps montrant le fonctionnement de l'organe de multiplication dans le mode simple précision.

La figure 13 est un schéma montrant la propagation des calculs dans l'organe de multiplication faisant partie du dispositif de multiplication.

La figure 14 est un diagramme-temps montrant le fonctionnement du dispositif de multiplication dans le mode complexe.

La figure 15 est un diagramme-temps montrant le fonctionnement du dispositif de multiplication dans le mode double précision.

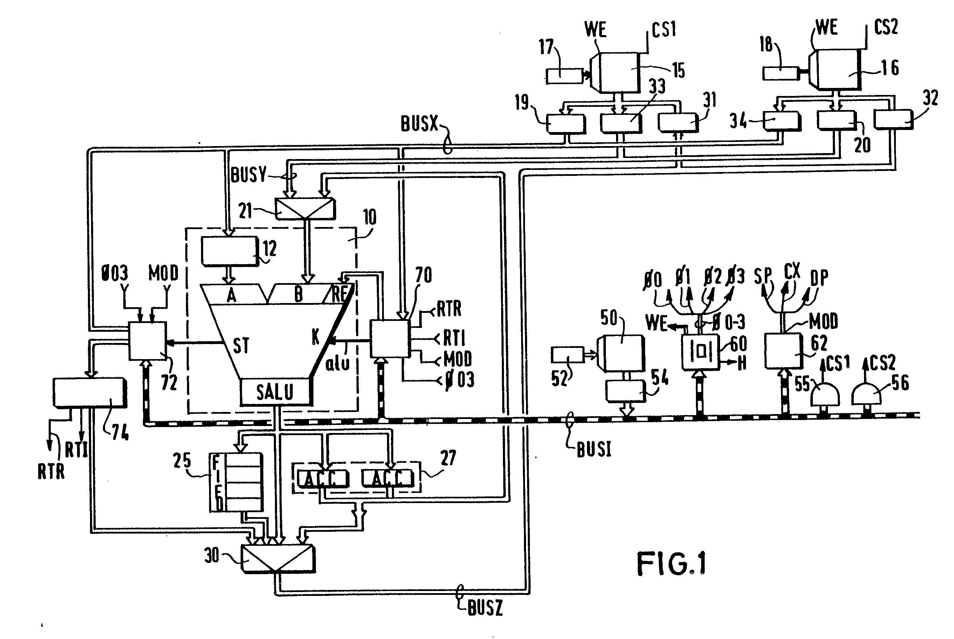

Le processeur montré à la figure 1 comporte une unité arithmétique et logique 10. Cette unité est munie d'une entrée d'opérande A à 16 bits, d'une entrée d'opérande B à 16 bits aussi, d'une entrée pour retenue RE et d'une sortie SALU où apparaissent les résultats sur 16 bits des opérations effectuées. La nature de ces opérations dépend d'un code "alu" appliqué à l'entrée pour code de commande K. L'unité 10 est munie d'une sortie ST pour définir le code de statut de l'unité 10. A cette unité 10 on peut accoupler sur l'entrée d'opérande A, comme indiqué sur cette figure 1, une unité de décalage binaire 12 (BARREL SHIFTER).

Une telle unité 10, qui est supposée être d'un type classique, accouplée avec l'unité 12 peut effectuer les opérations indiquées dans le tableau I ci-dessous en fonction d'un code "alu" se présentant sous la forme d'un mot binaire à 5 bits. A ce mot binaire, on fait correspondre un code mnémotechnique écrit en lettres minuscules. La quantité (RTE) représenté la valeur du signal appliqué à l'entrée RE.

Le tableau ci-dessous donne en outre des indications sur les données fournies à la sortie ST. L'information "sr" donne le signe du nombre à la sortie SALU, "rt" la valeur de la retenue; "z" indique si le nombre à la sortie SALU est égal à zéro, "ov" indique s'il y a un dépassement, "mov" est un dépassement mémorisé, l'information "aov" représente la value $SA15 \oplus SA14$ où $SA15$ et $SA14$ représentent les éléments binaires de plus fort poids du nombre contenu dans le registre SALU et le symbole $\oplus$: l'opération "OU Exclusif".

4

## TABLEAU I

| mot binaire | | | | | mnémo | OPERATIONS | sr | rt | z | ov | mov | aov |
|---|---|---|---|---|---|---|---|---|---|---|---|---|
| 0 | 0 | 0 | 0 | 0 | clr | 0 | 0 | 0 | 1 | 0 | – | 0 |
| 0 | 0 | 0 | 0 | 1 | add | $B + A/16$ | * | * | * | * | * | * |
| 0 | 0 | 0 | 1 | 1 | apbc | $A + B + (RTE)$ | * | * | * | * | * | * |
| 0 | 0 | 1 | 0 | 1 | ambc | $A + \overline{B} + (RTE)$ | * | * | * | * | * | * |
| 0 | 1 | 0 | 0 | 0 | bmac | $\overline{A} + B + (RTE)$ | * | * | * | * | * | * |
| 0 | 0 | 1 | 1 | 1 | dld | (schéma) → rt | * | * | * | 0 | – | * |
| 0 | 1 | 1 | 1 | 1 | dad | (schéma) → rt | * | * | * | 0 | – | * |
| 1 | 1 | 0 | 1 | 1 | dlg | rt ← (schéma) | * | * | * | 0 | – | * |
| 0 | 1 | 0 | 1 | 1 | 'dag | rt ← (schéma) | * | * | * | *"1" | – | * |
| 1 | 0 | 1 | 1 | 1 | rod | (schéma) → rt | * | * | * | 0 | – | * |
| 0 | 1 | 1 | 0 | 1 | lou | $A + B$ | * | 0 | * | 0 | – | * |
| 0 | 1 | 1 | 1 | 0 | let | $A \cdot B$ | * | 0 | * | 0 | – | * |
| 0 | 1 | 1 | 0 | 0 | xou | $A \oplus B$ | * | 0 | * | 0 | – | * |
| 1 | 0 | 1 | 0 | 0 | tra | $A$ | * | 0 | * | 0 | – | * |
| 1 | 0 | 1 | 0 | 1 | trb | $B$ | * | 0 | * | 0 | – | * |
| 1 | 0 | 1 | 1 | 0 | cmp | $\overline{B}$ | * | 0 | * | 0 | – | * |
| 1 | 1 | 0 | 1 | 0 | dld 8 | id à dld mais sur 8 bits | * | * | * | 0 | – | * |
| 1 | 1 | 0 | 0 | 1 | dlg 8 | id à dlg mais sur 8 bits | * | * | * | 0 | – | * |

NOTA : Les signes +, . et ⊕ définissent respectivement
les opérations OU logique, ET logique et
OU Exclusif pour les codes "lou", "let", "xou".
"1" ov = SA14 ⊕ SA15.

5

EP 0 173 383 B1

Les opérandes A et B peuvent provenir de mémoires 15 et 16 respectivement auxquelles sont adjoints les circuits d'adressage 17 et 18. Ces mémoires reçoivent un signal WE qui les met soit en écriture soit en lecture et un signal de validation (CS1 et CS2 respectivement). La sortie de la mémoire 15 peut être reliée à l'entrée d'opérande A par l'intermédiaire d'un registre de sortie 19, d'une ligne à plusieurs fils (dans cet exemple 16) BUSX et de l'unité 12. De même la sortie de la mémoire 16 peut être reliée à l'entrée d'opérande B par l'intermédiaire d'un registre de sortie 20, d'une ligne à plusieurs fils (16 aussi) BUSY et d'un multiplexeur 21. Les résultats contenus dans le registre de sortie SALU peuvent être emmagasinés dans une mémoire 25 du type première donnée entrée, première donnée sortie (mémoire FIFO) ou dans un ensemble d'accumulateurs 27. Un multiplexeur de sortie 30 permet d'aiguiller les résultats des opérations effectuées par l'unité 10, mémorisés ou non par la mémoire 25 ou les accumulateurs 27, dans les mémoires 15 et 16. Pour cela, il est prévu une ligne à plusieurs fils BUSZ connectée d'une part à la sortie du multiplexeur 30 et d'autre part aux registres d'entrée 31 et 32 affectés respectivement aux mémoires 15 et 16. En outre, il est prévu deux registres de sortie supplémentaires 33 et 34 pour les mémoires 15 et 16 afin d'établir une connexion entre leur sortie et les lignes BUSY et BUSX respectivement.

Il convient de bien remarquer que l'on a prévu une ligne de connexion directe entre la sortie de l'ensemble d'accumulateurs 27 et l'entrée d'opérande B de l'unité 10 en passant par le multiplexeur 21. Grâce à cette ligne de connexion, on peut effectuer d'une manière avantageuse les opérations d'accumulation. En effet le nombre contenu dans l'ensemble 27 est transmis à l'entrée de l'unité 10 sans utiliser les lignes BUSX, BUSY ou BUSZ.

Tout le fonctionnement de processeur de la figure 1 est régi par une succession d'instructions contenues dans une mémoire-programme 50 adressée par un compteur-programme 52. Les instructions en cours d'exécution sont emmagasinées dans un registre d'instructions 54 dont les sorties sont reliées à une ligne BUSI à plusieurs fils (dans cet exemple 32). C'est à partir de cette ligne BUSI qu'il est possible d'élaborer les signaux CS1 et CS2 au moyen de deux décodeurs 55 et 56 pour reconnaître si les mémoires 15 et 16 sont impliquées ou non par l'instruction transmise par cette ligne BUSI.

Le fonctionnement du processeur de la figure 1 s'éffectue au rythme d'un dispositif d'horloge 60.

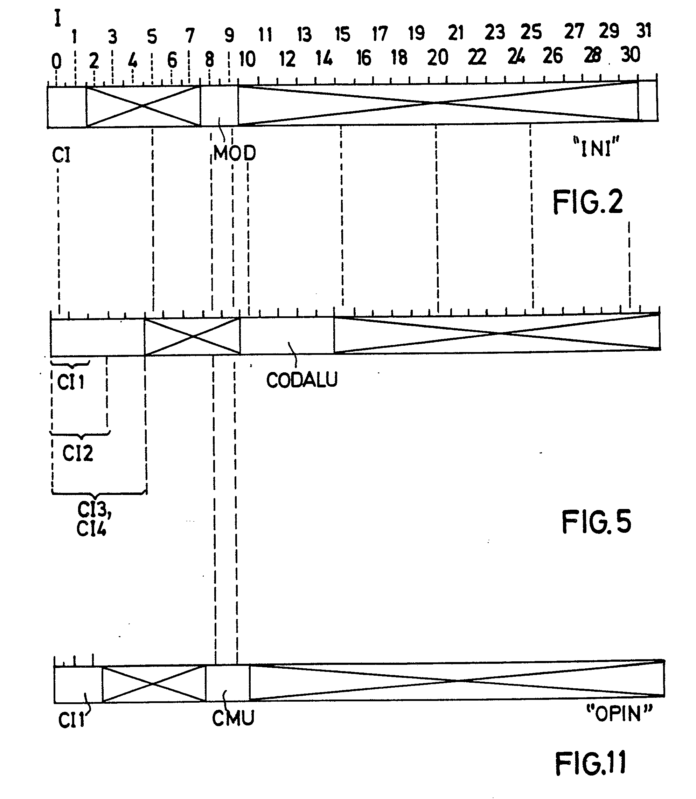

Le processeur de l'invention, pour effectuer suivant différents modes (notamment mode de simple précision, de doube précision d'opérations complexes), est pourvu de moyens inclus notamment dans le dispositif d'horloge 60 pour engendrer des phases de traitement (Ø0, Ø1, Ø2, Ø3 . . .) déclenchées par une instruction de déclaration de mode (voir figure 2) et de moyens (circuit de mode 62) pour fournir des indications de modes afin que les instructions suivantes soient exécutées dans le mode déclaré. Chaque phase Ø0, Ø1, Ø2, Ø3 a une durée de temps égale à TT. exécutées dans le mode déclaré. Chaque phase Ø0, Ø1, Ø2, Ø3 a une durée de temps égal à TT.

Ces signaux de phases sont transmis par un ensemble de fils repérés par Ø0—3.

L'instruction de déclaration de mode se caractérise par un code CI (11) placé aux emplacements binaires I0; et I1; aux emplacements I8 et I9 on trouve les éléments binaires qui définnissent le mode.

|  |  |  |
|---|---|---|
| I8 = 0 | I9 = 1 | mode simple précision |
| I8 = 1 | I9 ≐ 0 | mode double précision |
| I8 = 1 | I9 = 1 | mode complexe. |

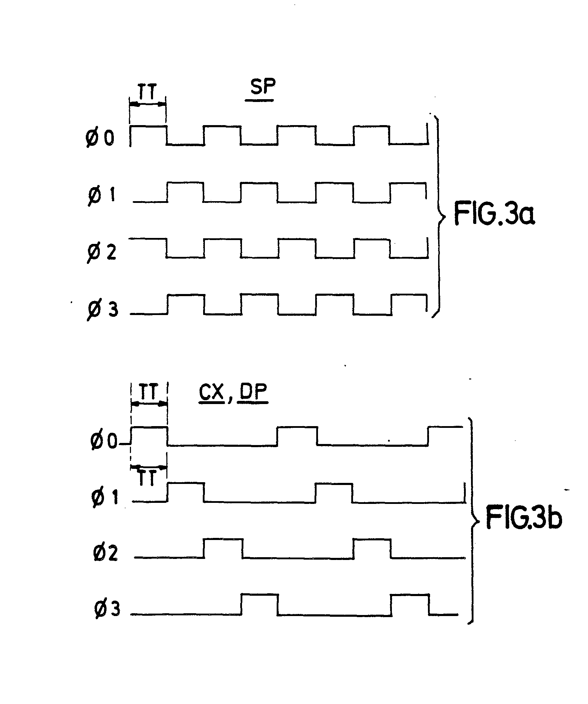

Ainsi le circuit 62 au moyen d'un circuit de décodage et de circuits de mémorisation, non représentés, fournit sur un des fils SP, CX, DP connectés à sa sortie un signal logique permanent de valeur logique "1". L'ensemble des fils SP, CX, DP est repéré par le référence MOD. Le circuit 60 fournit des signaux de rapport cyclique égal à 0,5 dont l'allure est montrée à la figure 3a lorsqu'on est en mode simple précision et à la figure 3b lorsqu'on est en mode complexe ou en mode double précision. On constate à la figure 3a que les signaux Ø0 sont identiques aux signaux Ø2, ces signaux confondus étant par la suite repérés par Ø02; de même les signaux Ø1 sont identiques aux signaux Ø3, ces signaux confondus étant repérés par la suite par Ø13; les signaux Ø0, Ø2 sont en opposition de phase par rapport aux signaux Ø1 et Ø3, la durée pendant laquelle ces signaux sont actifs étant égale à TT. Ce circuit 60 élabore les signaux WE pour les mémoires 15 et 16.

Pour le mode de double précision et en opérations complexes les signaux Ø0 à Ø3, tous de rapport cyclique 0,25, sont tous déphasés d'une valeur égale à la durée TT pendant laquelle ils sont actifs.

Pour faire fonctionner en ces différents modes l'unité arithmétique et logique 10, on a prévu un circuit de gestion de code de commande et de retenue portant la référence 70 et un circuit de gestion de registre de statut, ce circuit de gestion de registre portant sur la figure 1 la référence 72 alors que le registre de statut porte la référence 74. Ce registre fournit sur les fils RTR et RTI des valeurs de retenue qui ont des significations différentes en fonction des modes.

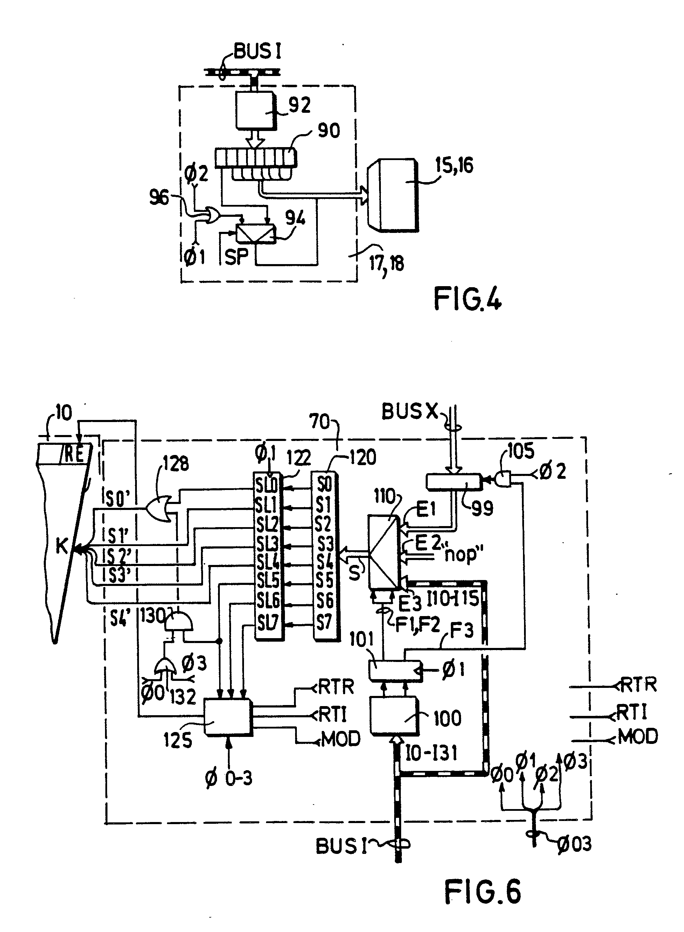

Les circuits d'adressage 17 et 18 ont été munis de moyens pour réaliser les fonctions dans les différents modes envisagés, ce qui est montré à la figure 4.

La référence 90 sur cette figure 4 représente un registre contenant l'adresse pour la mémoire 15 (16); ce registre 90 est chargé au moyen d'un circuit 92 connecté à la ligne BUSI non détaillé car non essentiel pour l'invention. Tous les éléments binaires contenus dans ce registre constituent le code d'adresse pour la

6

mémoire 15 (16) dans le mode de simple précision alors que dans le mode complexe ou en double précision l'élément binaire de plus faible poids est remplacé par un signal d'horloge, en l'occurrence le signal fourni par une porte "OU" 96 recevant sur ses entrées les signaux Ø1 et Ø2. Un multiplexeur 94 à deux entrées dont une entrée est connectée à la position du registre 90 contenant l'élément de plus faible poids, dont l'autre entrée reçoit le signal Ø2 et dont la commande reçoit le signal SP permet de réaliser le changement d'adressage entre le mode simple précision d'une part, et les modes complexes et de double précision, d'autre part.

Ainsi, on peut adresser, en mode complexe, les opérandes réels et imaginaires disposés dans des adresses successives. Par exemple, les parties réelles sont disposées dans les adresses paires et les parties imaginaires dans les adresses impaires et cela, automatiquement. Il en est de même pour le mode double précision pour les poids faibles et les poids forts.

Avant de décrire plus en détail l'invention, on donné la constitution des instructions concernées par l'invention. Ces instructions se caractérisent par des codes initiaux CI1, CI2, CI3 et CI4 disposés aux premières positions des instructions à titre indicatif. On donne ci-dessous, à titre indicatif, les différents codes numériques accompagnés d'un code mnémotechnique.

$$CI1 : 0 \quad 0 \qquad : OPIN$$

$$CI2 : 1 \quad 0 \quad 0 \qquad : OPDI$$

$$CI3 : 1 \quad 0 \quad 1 \quad 1 \quad 0 : OPIM$$

$$CI4 : 1 \quad 0 \quad 1 \quad 1 \quad 1 : DECAL$$

Le tableau II donne la valeur des éléments binaires et I10 à I14 des différents CODALU possibles.

TABLEAU II

| Code mnémo | 10 | 11 | 12 | 13 | 14 | Remarques |
|---|---|---|---|---|---|---|
| CLR | 0 | 0 | 0 | 0 | 0 | |
| ADD | 0 | 0 | 0 | 0 | 1 | B + A/16 |
| APB | 0 | 0 | 0 | 1 | 0 | A + B |
| APBC | 0 | 0 | 0 | 1 | 1 | A + B + (RTE) |
| AMB | 0 | 0 | 1 | 0 | 0 | A - B = A + $\overline{B}$ + 1 |
| AMBC | 0 | 0 | 1 | 0 | 1 | A + $\overline{B}$ + (RTE) |
| BMA | 0 | 0 | 1 | 1 | 0 | B - A = B + $\overline{A}$ + 1 |
| BMAC | 0 | 1 | 0 | 0 | 0 | B + $\overline{A}$ + (RTE) |
| DLD | 0 | 0 | 1 | 1 | 1 | Décalage logique à droite |
| DAD | 0 | 1 | 1 | 1 | 1 | Décalage arithmétique à droite |
| DLG | 1 | 1 | 0 | 1 | 1 | Décalage logique à gauche |
| DAG | 0 | 1 | 0 | 1 | 1 | Décalage arithmétique à gauche |
| ROD | 1 | 0 | 1 | 1 | 1 | Rotation à droite |
| LOU | 0 | 1 | 1 | 0 | 1 | OU logique |
| LET | 0 | 1 | 1 | 1 | 0 | ET logique |
| XOU | 0 | 1 | 1 | 0 | 0 | OU exclusif logique |
| TRA | 1 | 0 | 1 | 0 | 0 | Transfert de l'opérande A |
| TRB | 1 | 0 | 1 | 0 | 1 | Transfert de l'opérande B |
| CMP | 1 | 0 | 1 | 1 | 0 | $\overline{B}$ |
| STA | 0 | 1 | 0 | 0 | 1 | transfert du bus BUSX dans le registre 74 |
| DLD8 | 1 | 1 | 0 | 1 | 0 | Décalage logique à droite de 8 bits |
| DLG8 | 1 | 1 | 0 | 0 | 1 | Décalage logique à gauche de 8 bits |
| CD1 | 1 | 0 | 0 | 0 | 0 | |
| CD2 | 1 | 0 | 0 | 0 | 1 | commande de 10 par bus BUSX |
| CD3 | 1 | 0 | 0 | 1 | 0 | |
| ADDC | 0 | 1 | 0 | 1 | 0 | addition conjuguée (mode complexe) |
| NOP | 1 | 1 | 1 | 1 | 1 | |

Le circuit de gestion de code de commande et de retenue 70 montré en détail à la figure 6 permet l'exécution des opérations montrées dans le tableau III ci-dessous.

8

| Code mnémo | Mode simple précision | Mode complexe | | Double précision | |
|---|---|---|---|---|---|
| CLR | 0 | | | | |
| ADD | A + B/16 | Re(A) + [Re(B)/16] | Im(A) + [Im(B)/16] | F(A) + F(B)/16 | f(A) + F(B)/16 |
| APB | A + B | Re(A) + Re(B) | Im(A) + Im(B). | F(A) + F(B) | F(A) + F(B) + RTR |
| ADDC | | Re(A) + Re(B) | Im(A) − Im(B) | | |
| AMB | A + $\overline{B}$ + 1 | Re(A) + $\overline{Re(B)}$ + 1 | Im(A) + $\overline{Im(B)}$ + 1 | f(A) + $\overline{f(B)}$ + 1 | F(A) + $\overline{F(B)}$ + RTR |
| BMA | $\overline{A}$ + B + 1 | $\overline{Re(A)}$ + Re(B) + 1 | $\overline{Im(A)}$ + Im(B) + 1 | $\overline{f(A)}$ + f(B) + 1 | $\overline{F(A)}$ + (FB) + RTR |
| AMBC | A + $\overline{B}$ + R | Re(A) + $\overline{Re(B)}$ + 1 | Im(A) + $\overline{Im(B)}$ + 1 | f(A) + $\overline{f(B)}$ + 1 | F(A) + $\overline{F(B)}$ + RTR |
| BMAC | $\overline{A}$ + B + R | $\overline{Re(A)}$ + Re(B) + RTR | $\overline{Im(A)}$ + Im(B) + RTI | $\overline{f(A)}$ + f(B) + RTR | $\overline{F(A)}$ + F(B) + RTR |
| APBC | A + B + R | Re(A) + Re(B) + RTR | Im(A) + Im(B) + RTI | f(A) + f(B) + RTR | F(A) + F(B) + RTR |
| LOU | A + B | Re(A) + Re(B) | Im(A) + Im(B) | f(A) + f(B) | F(A) + F(B) |
| LET | A . B | Re(A) . Re(B) | Im(A) . Im(B) | f(A) . f(B) | F(A) . F(B) |
| XOU | A ⊕ B | Re(A) ⊕ Re(B) | Im(A) ⊕ Im(B) | f(B) ⊕ f(B) | f(A) ⊕ f(B) |
| TRA | A | Re(A) | Im(A) | f(A) | F(A) |
| TRB | B | Re(B) | Im(B) | f(B) | F(B) |
| CMP | B | Re(B) | Im(B) | f(B) | F(B) |
| DLD | *(diagramme)* | *(diagramme)* | *(diagramme)* | | |
| DAD | *(diagramme)* | *(diagramme)* | *(diagramme)* | | |
| DLG | *(diagramme)* | *(diagramme)* | *(diagramme)* | | |
| DAG | *(diagramme)* | *(diagramme)* | *(diagramme)* | | |
| ROD | *(diagramme)* | *(diagramme)* | *(diagramme)* | | |
| DLD8 | id à DLD mais /8 bits | id à DLD mais sur 8 bits | | | |
| DLG8 | id à DLG 8 bits | id à DLG mais sur 8 bits | | | |
| NOP | aucune opération | pas de modification du statut | | | |

Re(A) : partie réelle de A qui survient avant la partie imaginaire de A : Im(A) à l'entrée d'opérande A
F(A) : partie de fort poids de A qui survient après la partie de faible poids de A : f(A) à l'entrée d'opérande A
− − − id pour Re(B), Im(B), F(B) et f(B)
RTR : retenue pour partie réelle, aussi utilisée pour le mode simple et double précision.
RTI : retenue pour partie imaginaire

Le code d'entrée à traiter par le circuit 70 provient soit de la ligne BUSI soit de la ligne BUSX par l'intermédiaire d'un registre 99.

Cependant le code provenant de la ligne BUSX est soumis à la dépendance du code CODALU provenant de la ligne BUSI. Ces codes CODALU sont décodés par un circuit de décodage 100 (figure 6) suivi par un registre 101 pour fournir à l'instant fixé par le signal Ø1 le résultat du décodage (soit les signaux F1, F2 et F3). Ce circuit 100 a pour but de décoder les codes CODALU suivants.

TABLEAU IV

| CODALU | Opération |
|---|---|
| CD1 | chargement de 99 et exécution définie par le contenu du registre 99 précédent. |
| CD2 | pas de chargement de 99 et exécution définie par le contenu du registre 99 précédent. |
| CD3 | chargement de 99 et aucune exécution (NOP) |

Le signal F3 est à l'état 1 lorsqu'on a affaire aux CODALU: CD1 et CD3. Ce signal rend passante une porte ET 105 pour que les informations véhiculées par la ligne BUSX soient emmagasinées dans le registre 99 lorsque le signal Ø2 appliqué à l'autre entrée de la porte 105 devient actif. Les signaux F1 et F2 agissent sur la commande d'un multiplexeur 100 à trois entrées E1, E2 et E3. A l'entrée E1 est connecté le faisceau de sorties du registre 99, à l'entrée E2 sont appliqués en permanence des signaux correspondant au code "nop" signifiant que l'on désire qu'aucune opération ne soit effectuée par l'unité 10 et à l'entrée E3 sont connectés les fils de la ligne BUSI correspondant aux positions I10 à I14 des instructions. Ainsi pour le code CODALU = CD1 il y aura une connexion entre E1 et la sortie S du multiplexeur 110, pour le CODALU = CD2 il y aura une connexion entre E1 et la sortie S du multiplexeur 110, pour le CODALU = CD3 une connexion entre E2 et la sortie S du multiplexeur 110 et pour CODALU ≠ CD1, CD2 et CD3 la connexion entre E3 et S est effectuée.

Les différents codes à la sortie du multiplexeur 110 sont ensuite décodés par un décodeur 120 qui fournit des signaux sur différentes sorties S0 à S7. Ces signaux S0 à S7 sont appliqués à un registre 122 de type "bascule 0" recevant sur son entrée horloge un signal Ø1.

Aux signaux présents sur les sorties S0 à S7, le registre fait correspondre des signaux à ses sorties SL0 à SL7.

Le code appliqué à l'entrée K de l'unité 10 est constitué des signaux présents à la sortie d'une porte OU 128 à deux entrées et aux sorties SL1 à SL4. Une entrée de la porte OU 128 reçoit le signal disponible à la sortie SL0 et l'autre reçoit le signal de sortie d'une porte ET 130 à deux entrées dont l'une reçoit le signal SL5 et l'autre le signal de sortie d'une porte OU 132; cette porte OU 132 reçoit sur ses deux entrées les signaux Ø0 et Ø3 respectivement. Les signaux appliqués à l'entrée K sont appelés signaux S0', S1', S2', S3', S4'.

Le circuit décodeur 125 assure la gestion de la retenue pour l'entrée RE de l'unité 10, il reçoit les signaux SL5, SL6, SL7 et les signaux RTR et RTI issus du registre de statut 74 et le signal MOD.

Si on appellee SI0, SI1, SI2, SI3 ou SI4 le code appliqué au circuit 120, celui-ci est câble pour faire les opérations suivantes:

S0 = SI0

S1 = SI1

S2 = SI2

S3 = SI3

S4 = SI4

C'est-à-dire que ces bits sont pratiquement transmis directement au circuit 10.

Le signal S5 n'est actif que dans le mode complexe et seulement pour l'opération A + B*. B*

10

représente la value conjuguée de B, le code mnémotechnique CODALU est ADDC et le mot binaire correspondant (0 1 0 1 0) donc:

$$S5 = \overline{I10}.I11.\overline{I12}.I13.\overline{I14}$$

Le signal S6 est actif lorsque le code CODALU implique la participation d'une retenue, c'est-à-dire les codes AMB, BMA, APBC, BMAC, APBC et ADDC.

Le signal S7 est actif pour les codes CODALU impliquant la retenue "1" c'est-à-dire les codes AMB, BMA.

Le circuit de gestion de retenue 125 qui est formé par un réseau logique programmable et qui est connecté aux fils RTR, RTI, MOD et Ø0—3 peut être facilement programmé, tout comme le circuit 120, à l'aide des tableaux ci-dessous. Il est entendu que RTR transmet la valeur de la retenue en mode simple précision et double précision et la valeur de la retenue réelle en mode complexe et que RTI transmet la valeur de la retenue imaginaire en mode complexe.

TABLEAU V
MODE SIMPLE PRECISION

| Code MNEMO | Retenue en RE | Code en K | Remarques |
|---|---|---|---|
| CLR | 0 | clr | |
| ADD | 0 | add | |
| APB | 0 | apbc | |
| ADDC | – | – | opération interdite |
| AMB | 1 | ambc | |
| BMA | 1 | bmac | |
| AMBC | RTR | ambc | |
| BMAC | RTR | bmac | |
| APBC | RTR | apbc | |
| LOU | 0 | lou | |
| LET | 0 | let | |
| XOU | 0 | xou | |
| TRA | 0 | tra | |
| TRB | 0 | trb | |
| CMP | 0 | cmp | |
| DLD | 0 | dld | |
| DAD | 0 | dad | |
| DLG | 0 | dlg | |
| DAG | 0 | dag | |
| ROD | 0 | rod | |
| DLD8 | 0 | dld8 | |
| DLG8 | 0 | dlg8 | |
| NOP | 0 | nop | |

TABLEAU VI

MODE DOUBLE PRECISION

| Code MNEMO | Retenue en RE | | Code en K | | Remarques |
|---|---|---|---|---|---|
| | Ø1+Ø2 | Ø0+Ø3 | Ø1+Ø2 | Ø0+Ø3 | |
| CLR | . | | ← clr → | | |
| ADD | | | ← add → | | |
| APB | 0 | RTR | ← apbc → | | |
| ADDC | – | – | – – | | opération interdite |
| AMB | 1 | RTR | ← amb → | | |
| BMA | 1 | RTR | ← bma → | | |
| AMBC | RTR | RTR | ← ambc → | | |
| BMAC | RTR | RTR | ← bmac → | | |
| APBC | RTR | RTR | ← apbc → | | |
| LOU | 0 | 0 | ← lou → | | |
| LET | 0 | 0 | ← let → | | |
| XOU | 0 | 0 | ← xou → | | |
| TRA | 0 | 0 | ← tra → | | |
| TRB | 0 | 0 | ← -trb → | | |
| CMP | 0 | 0 | ← cmp → | | |
| DLD | | | | | |
| DAD | | | | | |
| DLG | | | | | opérations non prévues |
| DAG | | | | | dans le mode |
| ROD | | | | | double précision |
| DLD8 | | | | | |
| DLG8 | | | | | |
| NOP | 0 | 0 | ← nop → | | |

TABLEAU VII

MODE COMPLEXE

| Code MNEMO | Retenue en RE | | Code en K | | Remarques |
|---|---|---|---|---|---|
| | Ø1+Ø2 | Ø0+Ø3 | Ø1 + Ø2 | Ø0 + Ø3 | |
| CLR | 0 | 0 | clr | clr | |
| ADD | 0 | 0 | add | add | |
| APB | 0 | 0 | apbc | apbc | |
| ADDC | 0 | 1 | apbc | bmac | voir porte 128 |
| AMB | 1 | 1 | ambc | ambc | |
| BMA | 1 | 1 | bmac | bmac | |
| AMBC | RTR | RTI | ambc | ambc | |
| BMAC | RTR | RTI | bmac | bmac | |
| APBC | RTR | RTI | apbc | apbc | |
| LOU | 0 | 0 | lou | lou | |
| LET | 0 | 0 | let | let | |
| XOU | 0 | 0 | xou | xou | |
| TRA | 0 | 0 | tra | tra | |
| TRB | 0 | 0 | trb | trb | |
| CMP | 0 | 0 | cmp | cmp | |
| DLD | 0 | 0 | dld | dld | |
| DAD | 0 | 0 | dad | dad | |
| DLG | 0 | 0 | dlg | dlg | |
| DAG | 0 | 0 | dag | dag | |
| ROD | 0 | 0 | rod | rod | |
| DLD8 | 0 | 0 | dld8 | dld8 | |
| DLG8 | 0 | 0 | dlg8 | dlg8 | |
| NOP | 0 | 0 | nop | nop | |

13

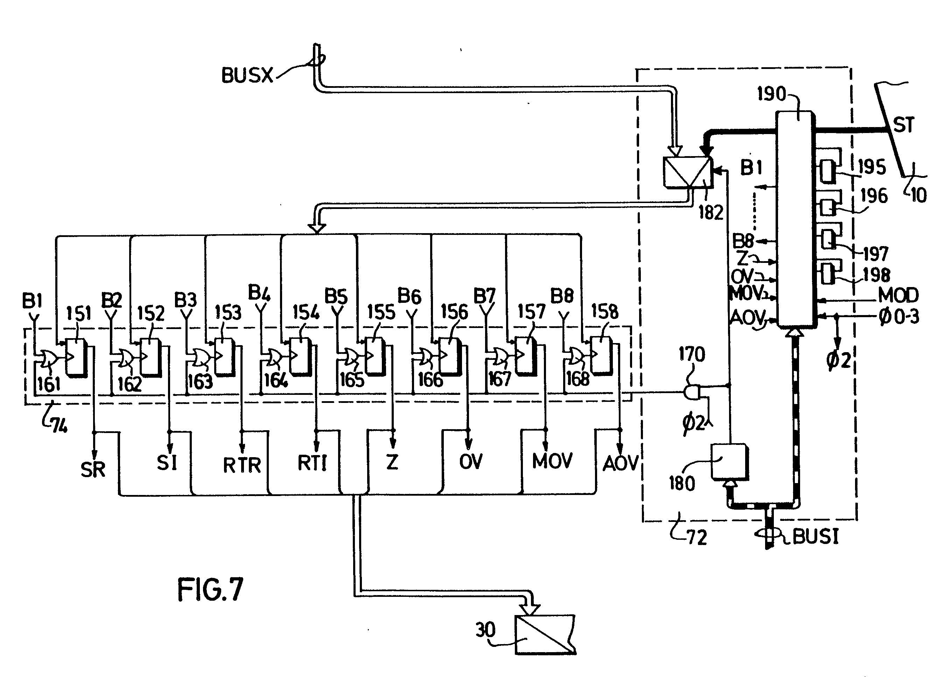

La figure 7 montre en détail le registre de statut 74 ainsi que son circuit de gestion 72. Les données de l'état de statut proviennent de l'unité 10. Ces données sont, on le rappelle "sr", "rt", "z", "ovf", "mov", "aov". Ces différentes données doivent être stockées dans des bascules 151, 152, ... 158 judicieusement en fonction du mode de fonctionnement. Pour que les données soient enregistrées il faut qu'un signal soit appliqué à leur entrée d'horloge; ce signal est fourni par les portes OU 161 à 168, toutes munies de deux entrées. Les premières entrées de ces portes OU sont reliées à la sortie d'une porte ET 170 à deux entrées faisant partie du circuit de gestion 72. Une de ces entrées reçoit le signal Ø2 et l'autre entrée reçoit le signal de sortie d'un circuit décodeur 180 qui, connecté à la ligne BUSI fournit un signal de sortie actif lorsque dans les instructions du type montré à la figure 5 on trouve le code STA à l'emplacement CODALU (voir Tableau II). Le signal de sortie du circuit décodeur 180 est appliqué en outre à la commande d'un multiplexeur 182 à deux entrées; une de ses entrées est reliée à la ligne BUSX, de sorte que le signal actif à la sortie du circuit décodeur 180 branche les entrées de données des bascules 151 à 158 sur la ligne BUSX et les données transmises par celle-ci sont alors emmagasinées dans lesdites bascules.

L'autre entrée du multiplexeur 182 est connectée à la sortie de statut ST de l'unité 10 par l'intermédiaire d'un circuit logique 190. Ce circuit logique 190 fournit aussi des signaux B1 à B8 pour les deuxièmes entrées des portes OU 161 à 168. Ce circuit logique 190 reçoit les informations provenant de la ligne BUSI, les signaux d'horloge Ø0—3 et l'information de mode de fonctionnement MOD. A ce circuit logique sont associées des bascules 195, 196, 197 et 198.

Le circuit logique 190 peut être facilement conçu à partir des considérations suivantes:

A) en mode simple précision:
— "sr" à la sortie ST est chargé dans la bascule 151 (SR) par un front de Ø3 pour tous les codes CODALU sauf NOP, CD3, STA;
— il y a interdiction de chargement pour la bascule 152 (SI);
— "rt" à la sortie ST est chargé dans la bascule 153 (RTR) par un front de Ø3 pour tous les codes CODALU sauf NOP, CD3, STA;
— il y a interdiction de chargement pour la bascule 154 (RTI);
— "z" à la sortie ST est chargé dans la bascule 155 (Z) par un front montant de Ø3 pour tous les codes CODALU sauf NOP, CD3, STA;
— "ov", "mov", "aov" sont chargés respectivement dans les bascules 156 (OV), 157 (MOV) et 158 (AOV) par un front montant de Ø3 sauf pour les codes NOP, CD3, STA.

B) en mode complexe:
— "sr" est chargé d'une part dans la bascule 151 (SR) par un front de Ø3 et d'autre part dans la bascule 152 (SI) par un front de Ø1 pour tous les codes CODALU sauf NOP, CD3, STA;
— "rt" est chargé d'une part dans la bascule 153 (RTR) par un front de Ø3 et d'autre part dans la bascule 154 (RTI) par un front de Ø1 pour tous les codes CODALU sauf NOP, CD3, STA;
— "ov", "mov", "aov" sont d'abord chargés respectivement dans les registres 196, 197, 198 par la phase Ø3, puis sur Ø1 on charge (OV + ov) dans la basculee 156, (AOV + aov) dans la bascule 157 et (MOV + mov) dans la bascule 158.
— "z" est chargé dans la bascule 195 en Ø3 et le signal de sortie Z est combiné avec le signal z en Ø1 de sorte que la bascule 195 est chargée de la valeur:

$$Z.z \text{ en } Ø1$$

(la valeur "1" de Z indique ainsi que les valeurs réelle et imaginaire sont toutes deux égales à 0).

C) en mode double précision:
— "sr" et "rt" sont chargés dans les bascules 151 (SR) et 153 (RTR) au front de Ø1;
— "ov", "mov" et "aov" le sont dans les bascules 156 (OV), 157 (MOV) et 158 (AOV) au front de Ø1;
— pour "z" on utilise à nouveau la bascule 195 chargée d'abord en Ø3 par le zéro de faible poids, puis le résultat de l'opération ET logique entre le signal de sortie de cette bascule et la valeur z de fort poids est chargé dans la bascule 195.

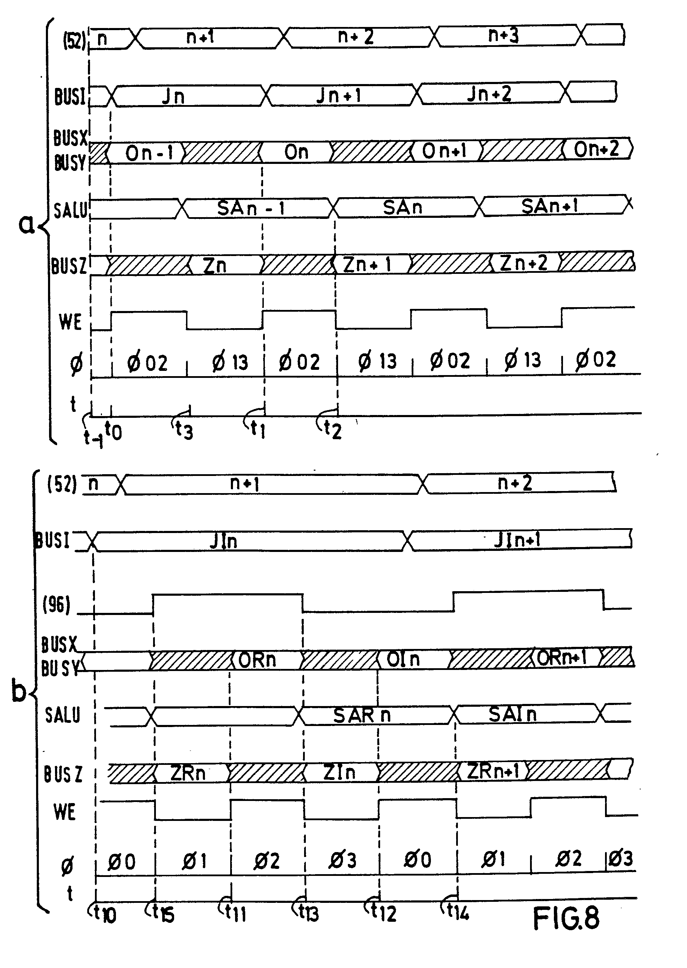

Les figures 8a et 8b représentent des diagrammes temps montrant le déroulement de l'exécution d'instruction en mode simple précision en *a* et en mode complexe et de double précision en *b*.

Dans le cas du mode simple précision, l'instruction Jn suivient à l'instant to, cette instruction provenant de la mémoire-programme 50 affectée à une adresse "n" donnée par le contenu du compteur programme 52; cette adresse était engendrée à l'instant t_{-1} survenant avant l'instant to. Dès l'instant to des données sont transmises sur les lignes BUSX et BUSY pendant toute la phase Ø0—2. Pendant la phase Ø13 qui suit, ainsi que d'ailleurs durant toutes les phases Ø13, les lignes BUSX et BUSY ne sont pas disponibles et sont mises à l'état de précharge. L'instruction Jn implique des opérandes On qui sont transmis par les lignes BUSX et BUSY à l'instant t1 début d'une phase Ø02. Le résultat SAn de l'opération commandée par l'instruction Jn se retrouve dans le registre SALU de sortie de l'unité 10 à l'instant t2. L'instruction Jn peut aussi impliquer des transferts d'informations disponibles à la sortie du multiplexeur 30 vers les mémoires 15 et 16. Les données Zn sont alors transférées dès l'instant t3 début d'une phase Ø13; c'est pendant les

phases Ø13 que la ligne BUSZ est disponible, la phase Ø02 étant occupée par l'état de précharge. A la figure 8, on a représenté un signal WE qui définit l'écriture des mémoires 15 et 16. Ces mémoires sont mises en lecture ou en écriture dans un cycle d'instruction. Le fonctionnement peut donc être résumé de la façon suivante:

Le compteur-programme 52 est incrémenté au début de chaque instruction pour préparer l'adresse de l'instruction suivante (n + 1) et adresser la mémoire-programme en parallèle avec l'exécution de l'instruction Jn. Les opérandes sources de l'instruction Jn sont disponibles au cycle suivant et l'opérande arithmérique et logique de l'instruction Jn s'effectue aussi au cycle (n + 1).

Il en découle que la donnée sauvegardée par la ligne BUSI à l'instruction Jn est le résultat d'un calcul précédent. Il existe donc 3 niveaux de pipe-line dans le processeur et 3 opérations sont faites simultanément:

— l'incrémentation du compteur-programme 52 pour l'instruction Jn + 1,
— le recherche des opérandes de l'instruction Jn
— et l'opération de l'unité 10 demandée par l'instruction J(n − 1).

Le fonctionnement du processeur en modes complexe et double précision est expliqué à la figure 8b.

Les lignes BUSX et BUSY transmettent des informations durant les phases Ø0 et Ø2 alors que la ligne BUSZ les transmet durant les phases Ø1 et Ø3. On suppose qu'à l'instant t10 apparaît une instruction JIn qui doit être exécutée dans le mode complexe ou double précision. Cette instruction fait apparaître en t11 sur les lignes BUSX et BUSY des informations ORn qui représentent les parties réelles des opérandes dans le mode complexe ou la partie de poids faible dans le mode double précision; puis pendant la phase Ø0 qui suit débutant à l'instant t12 les lignes BUSX et BUSY transmettent les parties imaginaires ou les forts poids selon le mode complexe ou double précision.

Il convient de bien remarquer que le code d'adresse des mémoires 15 et 16 change. L'élément binaire de faible poids est modifié par le signal de sortie de la porte 96 (voir figure 4) de sorte que le code d'adresse n'est pas le même pendant deux phases Ø2 et Ø0 consécutives. Le registre de sortie SALU de l'unité 10 fournit à l'instant t13 le résultat de l'opération sur les parties réelles ou sur les poids les plus faibles pendant la phase Ø3 et à l'instant t14 les parties imaginaires et les forts poids pendant la phase Ø1.

La ligne BUSZ transmet les parties réelles ou les faibles poids pendant la phase Ø1 qui débute à l'instant t15, cette transmission étant ordonnée par l'instruction JIn; les parties imaginaires et les forts poids transmis pendant la phase Ø3 débutant à l'instant t13. Les différentes mémoires 15 et 16 sont mises en lecture ou en écriture dans un cycle d'instruction (le signal WE autorise l'écriture des données dans la mémoire).

Le fonctionnement en modes complexe et double précision ressemble beaucoup au mode simple précision, à la différence suivante: la recherche des parties réelles ou de faible poids pour l'instruction JIn s'effectue en même temps que le calcul des parties imaginaires ou de fort poids de l'instruction JIn − 1.

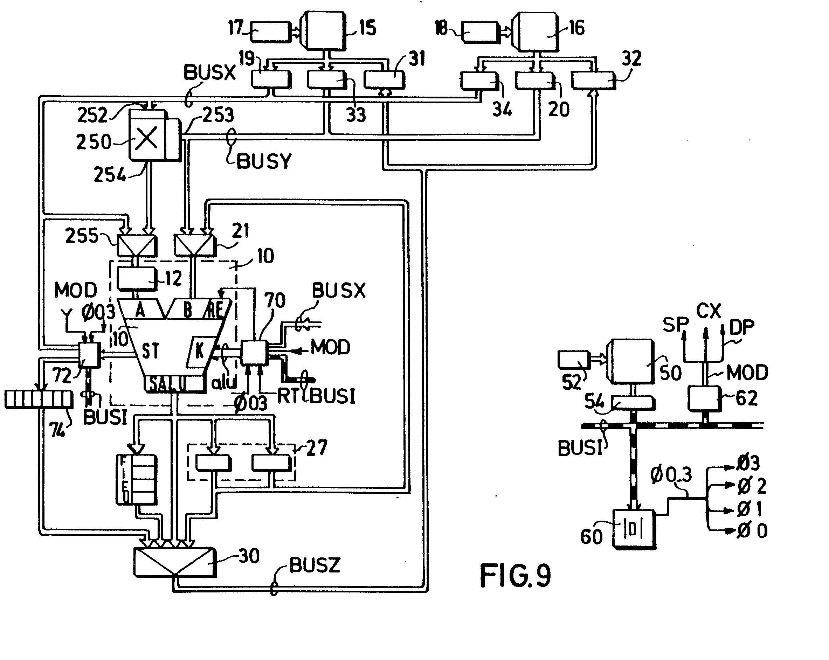

La figure 9 montre un exemple de réalisation préferé d'un processeur conforme à l'invention. Ce mode de réalisation diffère de celui déjà décrit par la présence d'un dispositif de multiplication 250 fonctionnant avec l'unité 10 en "PIPE-LINE". Ce dispositif 250 est muni de deux entrées 252 et 253 pour opérandes à 16 bits connectées aux lignes BUSX et BUSY. La sortie 254 du dispositif 250 est reliée à l'une des deux entrées d'un multiplexeur 255 dont la sortie est reliée à l'entrée d'opérande A de l'unité 10; la deuxième entrée de ce multiplexeur est reliée à la ligne BUSX.

La ligne de connexion directe entre la sortie de l'ensemble 27 et l'entrée B de l'unité 10 en passant par le multiplexeur 21 est particulièrement avantageuse pour effectuer des opérations d'accumulation en coopération avec le dispositif de multiplication 250. Les accumulations peuvent alors avoir lieu tout en lançant des multiplications avec des multiplicandes et des multiplicateurs transmis par les lignes BUSX et BUSY.

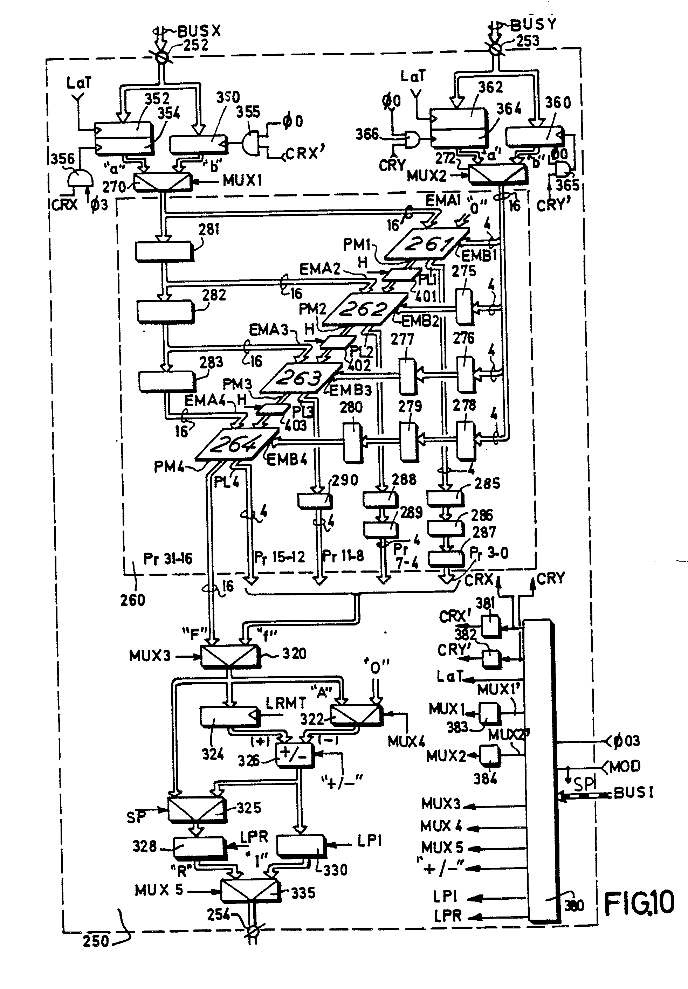

La figure 10 montre en détail la structure des dispositifs de multiplication 250. Ils sont constitués à partir d'un organe de multiplication 260 formé de quatre sous-organes de multiplication 261, 262, 263 et 264; ces sous-organes effectuent des opérations de multiplication sur un premier opérande de 16 bits appliqué à leurs entrées EMA1, EMA2, EMA3 et EMA4 respectivement avec un deuxième opérande de 4 bits appliqué à leur entrée EMB1, EMB2, EMB3 et EMB4 respectivement; ces sous-organes 261 à 264 sont de conception classique et il n'y a pas lieu de les décrire en détail; cependant si l'on veut, on peut se reporter à l'ouvrage de M. BELLANGER intitulé "Traitement numérique du signal" édité par MASSON et plus précisément aux pages 343 et 344.

L'entrée EMA1 est relié à la sortie d'un multiplexeur 270 à deux entrées pour signaux à 16 bits. L'entrée EMA1 est reliée aux 16 fils de sortie de ce multiplexeur commandé par un signal MUX1. L'entrée EMB1 est aussi reliée à la sortie d'un multiplexeur 272 commandé par un signal MUX2, muni de deux entrées pour signaux de 16 bits mais ici l'entrée EMB1 est reliée à 4 fils de sortie de ce multiplexeur; ces 4 fils transmettent les bits de poids faible du nombre disponible à la sortie du multiplexeur 272. L'entrée EMB2 reçoit les 4 bits de poids plus élevé de ce nombre par l'intermédiaire d'un organe de retard 275 amenant un retard TT, l'entrée EMB3 reçoit les 4 bits suivants par l'intermédiaire de deux organes de retard 276 et 277 amenant chacun un retard TT et l'entrée EMB4 les quatre derniers bits de poids les plus élevés par l'intermédiaire de trois organes de retard 278, 279 et 280 amenant eux aussi un retard TT. Les entrées EMA2, EMA3 et EMA4 sont reliées respectivement aux sorties d'organes de retard 281, 282 et 283 montés en cascade à la sortie du multiplexeur 270; ces organes amènent eux aussi chacun un retard TT.

15

Les sorties des organes de multiplication se scindent en deux parties, une partie appelée PL1, PL2, PL3 et PL4 pour respectivement chacun des sous-organes de multiplication; ces parties PL1 à PL4 transmettent 4 bits de poids faible issus de ces sous-organes et forment ensemble les 16 bits de poids faible Pr15 à Pr0 résultat de la multiplication. Il faut cependant noter la présence d'organes de retard 285, 286 et 287 pour la partie PL1, 288, 289 pour PL2 et 290 pour PL3, chacun de ces organes amenant un retard TT. Les autres sorties de la seconde partie sont appelées PM1, PM2, PM3 et PM4 pour chacun des sous-organes 261, 262, 263 et 264. Ces sorties transmettent 16 bits. Les signaux de sortie PM1, PM2, PM3 sont appliqués aux sous-organes 262, 263 et 264 respectivement. Les sorties PM4 représentent les bits Pr31 à Pr16 de plus fort poids du résultat de la multiplication. Un multiplexeur 320 à deux entrées sélectionne soit les bits Pr31 à Pr16 il est en position "F", soit les bits Pr15 à Pr0 il est alors en position "f"; cette sélection est fonction d'un signal de commande MUX3. La sortie de ce multiplexeur est reliée à l'une de deux entrées d'un multiplexeur 322 recevant un signal de commande MUX4 pour le mettre en position "0" ou "A", à un registre 324 dont la commande d'enregistrement reçoit un signal LRMT et enfin à l'une des deux entrées d'un multiplexeur 325 recevant le signal SP de commande de position. L'autre entrée du multiplexeur 322 reçoit en permanence le nombre "0" sur 16 bits; en position "0" ce nombre "0" apparaît à sa sortie alors qu'en position "A" c'est le nombre issu du multiplexeur 320 qui y est présent. Les sorties du multiplexeur 322 et du registre 324 sont reliées aux entrées (−) et (+) respectivement d'un organe d'addition-soustraction 326 muni d'une commande recevant un signal "+/−" pour le mettre soit en position d'addition soit en position de soustraction, c'est-à-dire qu'au nombre présent à la sortie du registre 324 on soustrait le nombre présent à la sortie du multiplexeur 322. La sortie de cet organe 326 est reliée d'une part par l'intermédiaire du multiplexeur 325 à un registre 328 recevant un signal de commande d'enregistrement LPR et d'autre part à un registre 330 recevant un signal de commande d'enregistrement LPI. Les sorties de ces registres sont reliées aux deux entrées d'un multiplexeur 335 muni d'une commande recevant un signal MUX5 pour le mettre soit en position "R" et sa sortie est en relation avec le registre 328, soit en position "I" et sa sortie est en relation avec le registre 330. La sortie du multiplexeur 335 constitue la sortie 254 de l'organe de multiplication 250.

Avant d'être traités par l'organe de multiplication les opérandes aux entrées 252 et 253 transitent dans des séries de registres. L'entrée 252 est reliée d'une part à un registre 350 et d'autre part à un ensemble de deux registres 352 et 354 montés en cascade; les registres 350 et 352 reçoivent respectivement les signaux de commande d'enregistrement issus d'une porte "ET" 355 et d'une porte "ET" 356. Le signal de commande d'enregistrement du registre 352 est un signal LaT. La porte ET 355 reçoit sur ses entrées le signal Ø0 et un signal CRX' tandis que la porte ET 356 reçoit le signal Ø3 et un signal CRX.

Les sorties des registres 350 et 354 sont reliées aux deux entrées du multiplexeur 270 commandé par le signal MUX1 pour le mettre en position "a" ou en position "b". En position "a" la sortie du multiplexeur est reliée au registre 354 et en position "b" cette sortie est reliée au registre 350. De la même manière l'entrée 253 est reliée d'une part à un registre 360 et d'autre part à un ensemble de deux registres 362 et 364 montés en cascade; les registres 360, 362 reçoivent respectivement les signaux de commande d'enregistrement issus d'une porte "ET" 365 et d'une porte "ET" 366. Le signal de commande d'enregistrement du registre 362 est le signal LaT. La porte ET 365 reçoit sur ses entrées le signal Ø0 et un signal CRY' tandis que la porte ET 366 reçoit le signal Ø3 et un signal CRY. Les sorties des registres 360 et 364 sont reliées aux deux entrées du multiplexeur 272. Ce multiplexeur 272 est commandé par un signal MUX2 pour le mettre en position "a" ou en position "b". En position "a" la sortie du multiplexeur est reliée au registre 364 et en position "b" au registre 360. Les différents signaux LaT, CRX, CRX', CRY, CRY', MUX1, MUX2, MUX1', MUX2', MUX3, MUX4, MUX5, "+/−", LPI et LPR sont élaborés au moyen d'un circuit de commande 380 et d'organes de retard 381, 382, 383 et 384. Ce circuit effectue les fonctions suivantes en fonction d'un code de commande de multiplication CMU. Ce code de commande de multiplication se trouve placé aux bits n° 20 et 21 d'une instruction de type OPIN caractérisée par les bis n° 0 et n° 1 égaux à "0". Le code CMU peut prendre quatre valeurs et le Tableau VIII en donne les différentes possibilités.

TABLEAU VIII

| CMU | | |
|-----|-----|---|
| I20 | I21 | |
| 0 | 0 | Les anciennes valeurs d'opérande sont conservées. |
| 1 | 0 | L'opérande BUSX est enregistré, l'opérande BUSY ignoré. |
| 0 | 1 | L'opérande BUSX est ignoré, l'opérande BUSY enregistré. |
| 1 | 1 | Les opérandes BUSX et BUSY sont enregistrés. |

Le circuit de commande 380 fournit donc les différents signaux de commande en fonction des équations logiques suivantes:

$$LaT = \emptyset2$$

$$CRX = \overline{I0}.\overline{I1}.I20$$

$$CRY = \overline{I0}.\overline{I1}.I21$$

$$MUX1' = \emptyset0 + \emptyset3 + \overline{CX}$$

$$MUX2' = \emptyset0 + \emptyset2 + \overline{CX}$$

$$MUX3 = (\emptyset0 + \emptyset3).DP$$

$$MUX4 = CX$$

$$MUX5 = \emptyset1 + \emptyset2$$

$$"+/-" = (\emptyset0 + \emptyset3).CX$$

$$LPI = \emptyset3.\overline{SP}$$

$$LPR = (\emptyset1.\overline{SP}) + (\emptyset0.SP)$$

Les organes 381, 382 sont des bascules de transfert qui agissent sur la phase Ø1 pour retarder les signaux CRX et CRY afin de fournir les signaux CRX' et CRY'. Les organes 383 et 384 amènent un retard de TT/2 sur les signaux MUX1' et MUX2' afin de fournir les signaux MUX1 et MUX2. La valeur "1" de MUX1 et MUX2 indique que la position "b" est considérée et la valeur "0" la position "a". La valeur "1" pour MUX3 indique que la position "F" est considérée, la valeur "0" la position "f". La valeur "1" pour MUX4 indique que la position "0" est considérée et la valeur "0" la position "A". La valeur "1" de MUX5 indique que la position "R" est considérée et la valeur "0" la position "I". Lorsque "+/−" = 1 c'est le signe (−) qui est à considérer et lorsque "+/−" = 0 c'est le signe "+".

Il est bon de préciser les caractéristiques des sous-organes 261, 262, 263 et 264.

Les sous-organes 261, 262 et 263 effectuent des opérations de 5 bits × 16 bits en complément à deux. Le bit de signe de l'opérande à 5 bits est forcé à "0". Ces sous-organes fournissent 20 bits à leur sortie.

Le sous-organe 264 effectue des opérations de 4 bits × 16 bits en complément à deux avec 19 bits à la

EP 0 173 383 B1

sortie. Si on appelle S et P les opérandes, les indices qu'on leur affecte représentent le rang des bits; on peut donc écrire:

$$\left[ (-S_0 + \sum_{i=1}^{3} S_i \, 2^{-i}) + (2^{-4} \sum_{i=0}^{3} S_{i+4} 2^{-i}) + (2^{-8} \sum S_{i+8} \cdot 2^{-i}) \right.$$

$$\left. + (2^{-12} \sum_{i=0}^{3} S_{i+12} \cdot 2^{i}) \right] \times \left[ -P_0 + \sum_{i=1}^{15} P_i \cdot 2^{-i} \right]$$

$P_0$ et $S_0$ représentent les bits de signe. La première somme entre parenthèses concerne le sous-organe 2644 et comporte donc 4 bits.

On notera la présence de registrés tampons 401, 402, 403 intercalés entre les sous-organes 261 et 262, 262 et 263, et 263 et 264; ces organes sont activés par un signal H fourni par le circuit 60; ce signal H présente une période égal à TT.

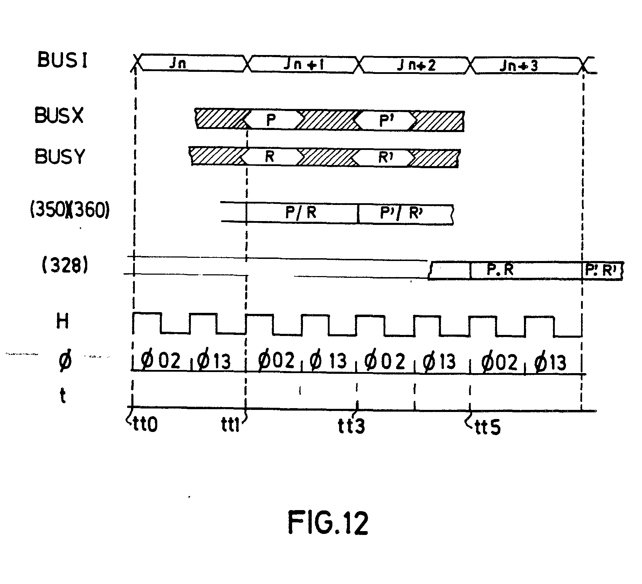

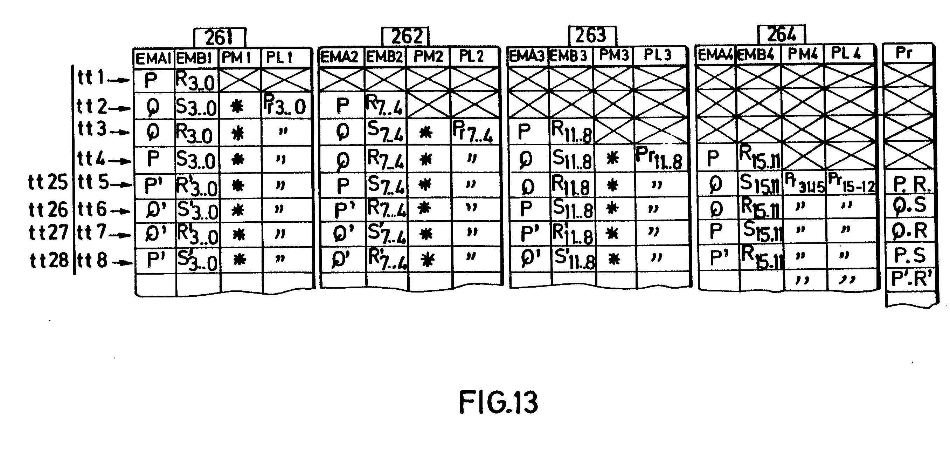

On examine tout d'abord le fonctionnement de l'organe de multiplication 250 dans le mode simple précision. Pour cela on se reporte aux figures 12 et 13.

Soit l'instant tt0 (figure 12) où apparaît sur la ligne BUSI une instruction Jn impliquant une multiplication. Les opérandes P et R apparaissent ensuite respectivement sur les lignes BUSX et BUSY à l'instant tt1, le signal aux sorties des portes 355 et 356 devient actif et les opérandes P et R se retrouvent à la sortie des multiplexeurs 270 et 272 convenablement aiguillés par les signaux MUX1 et MUX2. Le sous-organe 261 commence aussitôt la première muliplication partielle avec l'opérande P et les 4 bits R3 . . 0 de l'opérande R dont le résultat sort après un temps TT. Soit l'instant tt2 (figure 13); les bits de poids faibles Pr3 . . . 0 sont alors déjà calculés et apparaissent à la sortie PL1 (voir la case numérotée 261 à la figure 13). Cependant ce résultat ne sera rendu disponible qu'après un retard égal à la somme de chacun des retards des organes 300, 301 et 302.

A l'instant tt2 le sous-organe 262 commence la deuxième multiplication partielle. A l'entrée EMA2, se retrouve toujours l'opérande P et à l'entrée EMB2 les bits R7 . . . 4. Les bits Pr7 . . . 4 apparaissent après une période de temps TT. (voir la case 262, figure 13).

A l'instant tt3, aux entrées EMA3 et EMB3 se trouvent l'opérande P et les bits R11 . . . 8 de l'opérande R. Le résultat (bits Pr11 . . . 8) est fourni après le temps TT (case 263, figure 12).

A l'instant tt4, l'opérande P et les bits R15 . . . 12 se trouvent aux entrées EMA4 et EMB4 du sous-organe 264. Le résultat complet de la multiplication apparaît d'une part à la sortie PM4 du sous-organe de multiplication 264 et aux diverses sorties PL1, PL2, PL3, PL4 chacune étant raccordée à un nombre judicieux d'organe de retard. Mais il est à noter que dans le mode simple précision, seuls les éléments binaires Pr31 . . . 16 sont pris en considération. Pour cela le multiplexeur 320 reçoit le signal MUX3 qui le met dans une position telle que le registre 328 soit mis en communication avec la sortie PM4. A l'instant tt5, le signal LPR devient actif et le résultat de la multiplication est rendu disponible à la sortie 254 via le multiplexeur 335 mis en position "R" par le signal MUX5. Il convient de noter que, bien que la multiplication soit déclenchée par l'instruction Jn, son résultat n'est disponible que deux instructions plus loin soit pour l'instruction Jn + 2. Ceci doit être pris en considération lors de la programmation du processeur de l'invention.

On examine maintenant le fonctionnement de l'organe de multiplication 250 dans le mode complexe. On propose donc d'expliquer la manière selon laquelle on effectue la multiplication:

$$(P + jQ) \times (R + jS)$$

dont le résultat est évidemment:

$$[(P \times R) - (Q \times S)] + j[(Q \times R) + (P \times S)]$$

Ceci implique qu'il faut donc effectuer quatre multiplication $P \times R$; $Q \times S$; $Q \times R$ et $P \times S$.

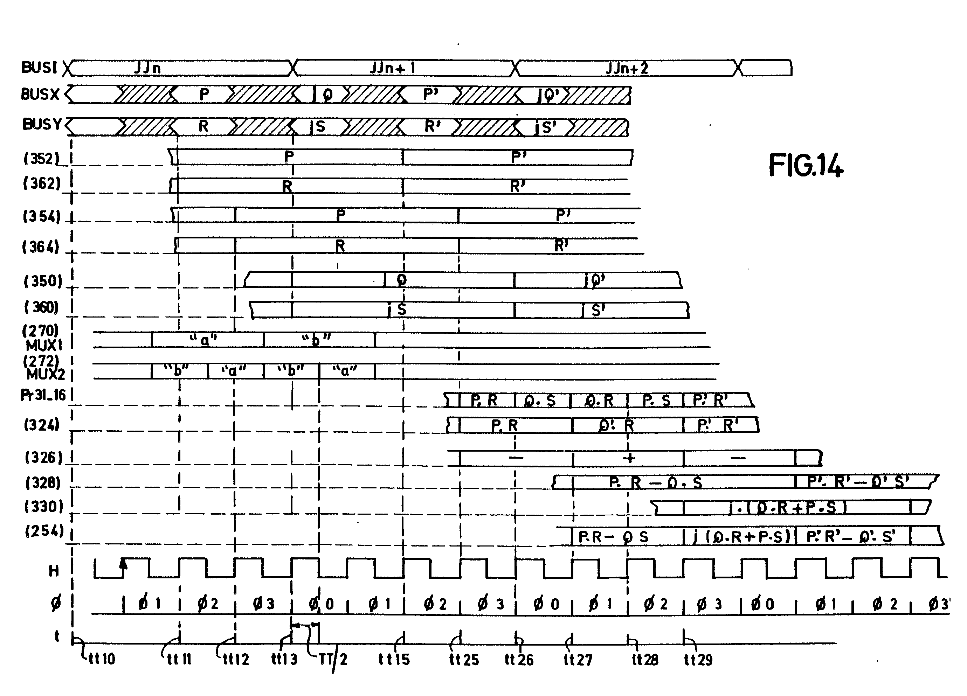

Pour cette explication on se reporte encore à la figure 13 et à la figure 14.

Il convient de signaler que les parties réelles transitent par les registres 352 et 354 et la partie imaginaire par le registre 350 en ce qui concerne un opérande. Pour l'autre opérande les parties réelles transitent par les registres 362 et 364 et la partie imaginaire par le registre 360.

A l'instant tt10 (figure 14) apparaît l'instruction JJn qui implique une multiplication dans le mode complexe. A l'instant tt11 les opérandes P et R sont disponibles sur les lignes BUSX et BUSY respectivement. Ces opérandes sont aussitôt emmagasinés dans les registres 352 et 362 ce qui est indiqué aux lignes portant les références (352) et (362) à la figure 14. A l'instant tt12 distant d'un temps TT les opérandes P et R sont transférés du registre 352 ou 362 au registre 354 et 364. Les multiplexeurs 270 et 272

18

étant déjà mis en position "a" par des signaux MUX1 et MUX2 de valeur convenable, la multiplication P × R est démarrée et se poursuit conformément à la figure 13 et au même rythme que dans le mode simple précision. A l'instant tt13 apparaissent sur les lignes BUSX et BUSY les opérandes purement imaginaires jQ et jS. Ceux-ci sont emmagasinés dans les registres 350 et 360, la multiplication commence, les multiplexeurs 270 et 272 étant mis en position "b". Pour effectuer la multiplication Q × R, le multiplexeur 272 est mis en position "a" à l'instant tt13 + TT/2 et pour effectuer la multiplication P × S le multiplexeur 272 est mis en position "a", le multiplexeur 270 restant en position "b". A l'instant tt15 peuvent apparaître de nouveaux opérandes P' et R' pour une multiplication en mode complexe. Cette opération est commencée après un temps TT sans attendre que la multiplication précédente soit achevée.

A l'instant tt25, le résultat de la multiplication P × R est disponible aux sorties Pr31 . . . 16 des sous-organes de multiplication. Ce résultat est enregistré dans le registre 324, le multiplexeur 320 étant en position "F" durant toutes les opérations en mode complexe. A l'instant tt26 apparaît le résultat Q × S, ce résultat est appliqué via le multiplexeur 322 à l'entrée négative de l'organe d'addition-soustraction qui a été mis en position de soustraction à l'instant tt25. L'information de sortie de cet organe représente la quantité PR − QS qui est la partie réelle de la multiplication. Ce résultat est emmagasiné dans le registre 328 à l'instant tt27. A cet instant tt27, les bits Pr31 . . . 16 représentent la quantité Q × R qui est enregistrée immédiatement dans le registre 324, l'organe 325 est mis en position addition. Puis à l'instant tt28 la quantité P × S est calculée de sorte qu'à l'instant tt29 la partie imaginaire j[(Q × R) + (P × S)] peut être emmagasinée dans le registre 330. Le multiplexeur 335 rend disponibles à la sortie 254 la partie réelle contenue dans le registre 328 pendant les phases Ø1 et Ø2 et la partie imaginaire contenue dans le registre 330 pendant les phases Ø3 et Ø0.

Ainsi on se rend compte que le résultat d'une multiplication complexe délenchée par l'instruction JJn est rendu disponible deux instructions plus tard à 'instruction JJn + 2.

On explique pour finir le fonctionnement de l'organe de multiplication en mode double précision. Dans ce cas les opérandes apparaissent systématiquement en deux fois sur 16 bits. Une première fois en transmet les bits de plus faible poids (p et r respectivement) et une deuxième fois les bits de plus fort poids (P et R respectivement). En fait, comme on le verra par la suite, l'organe de multiplication 250 ignore les parties de poids faibles et effectue l'opération sur les poids forts. Néanmoins le résultat (sur 32 bits) est fourni en sortie 254 en deux temps c'est-à-dire deux fois 16 bits. On notera que le bit de poids le plus faible n'est pas significatif et qu'en fait on ne considère que 31 bits.

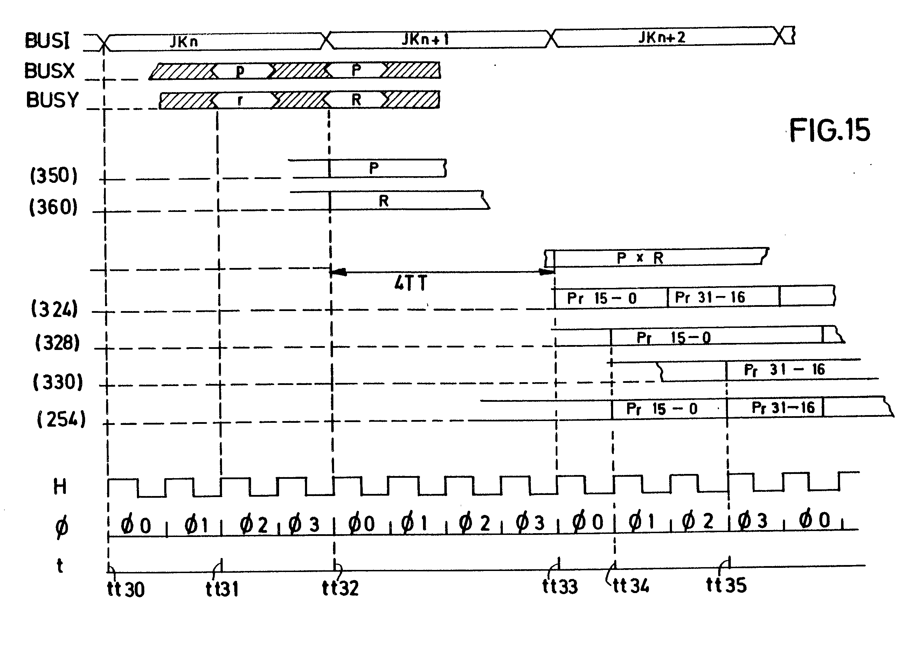

A l'instant tt30 (voir figure 15) apparaît l'instruction JKn qui implique une opération de multiplication en double précision. A l'instant tt31 apparaissent sur les lignes BUSX et BUSY les poids faibles p et r des opérandes; ceux-ci sont ignorés. Les poids forts P et R apparaissant sur ces mêmes lignes à l'instant tt32 sont enregistrés dans les registres 350 et 360 respectivement, le résultat attendu survient à l'instant tt33. Par une commande appropriée (MUX3) appliquée au multiplexeur 320 le registre 324 est mis en relation avec les poids faibles Pr15 . . . 0 du résultat de a multiplication. Les poids faibles y sont enregistrés puis ces mêmes poids faibles sont enregistrés dans le registre 328 à l'instant tt34. En ce même instant le multiplexeur 320 est mis dans son autre position c'est-à-dire la position "F" de sorte que le registre 324 puisse emmagasiner les poids forts Pr31 . . . 16. Ces poids forts sont ensuite enregistrés dans le registre 330 à l'instant tt35. Pour rendre ces différentes données disponibles à la sortie 254 le multiplexeur branche périodiquement tour à tour la sortie 254 sur le registre 328 et 330. (instant tt33 et tt34).

De même que pour les autres modes, le produit lancé à l'instruction JKn est disponible deux instructions plus tard à l'instruction JKn + 2.

## Revendications

1. Processeur pour effectuer le traitement de données suivant plusieurs modes, processeur comportant:
— une mémoire programme (50) pour contenir un ensemble d'instructions parmi lesquelles se trouvent des instructions de déclaration de mode et dans lesquelles est prévu un emplacement pour un code opératoire,
— un registre d'instructions (54) pour contenir les instructions provenant de la mémoire programme,
— une ligne commune d'instructions (BUSI) connectée en sortie du registre d'instructions,
— une unité arithmétique et logique munie de deux entrées d'opérande (A, B), d'une entrée de commande (alu) pour recevoir des mots de commande notamment un premier mot de commande correspondant à une addition des opérandes à ses entrées et un deuxième mot de commande correspondant à une soustraction des opérandes à ses entrées,
— un circuit de mode (62) connecté à la ligne commune d'instructions pour détecter les instructions de déclaration de mode et pour engendrer des signaux de mode (MOD),
— un circuit d'horloge (60) pour engendrer des signaux de phase (Ø1, Ø2, Ø3, Ø4) de traitement en fonction des signaux de mode pour que le traitement de données suivant soit exécuté dans le mode préalablement déclaré,
— un circuit de gestion de commande (70) et de retenue (72) pour fournir à l'entrée de commande (alu) de l'unité des mots de commande en fonction des codes opératoires et du mode déclaré,
caractérisé en ce qu'il est prévu un code opératoire (ADDC) pour effectuer en mode complexe l'opération addition conjuguée relative à deux données A et B formées d'une partie réelle (Re(A), Re(B) . . . et d'une partie imaginaire Im(A), IM(B) . . . pour fournir une partie réelle:

$$Re(A) + Re(B)$$

et une partie imaginaire:

$$IM(A) - Im(B)$$

et en ce que le circuit de gestion (70, 72) comporte des moyens déclenchés par le code opératoire addition conjuguée (ADDC) pour engendrer dans une phase de traitement l'un des premier et deuxième mots de commande et dans une autre phase l'autre des premier et deuxième mots.

2. Processeur selon la revendication 1, caractérisé en ce qu'il comporte en outre:

— un dispositif de multiplication (250) muni de deux entrées de multiplicande (252, 253), formé d'un organe de multiplication (260), d'un organe d'addition-soustraction (326) pour combiner les résultats fournis par l'organe de multiplication,

— un circuit de gestion de commande de multiplication (380) pour fournir des mots de commande de multiplication qui, notamment, détermine la fonction addition ou soustraction dudit organe d'addition-soustraction.

3. Processeur selon l'une des revendications 1 et 2, caractérisé en ce qu'il comporte des moyens de présentation (15, 16) d'opérande pour présenter aux entrées d'opérande et de multiplicande des données en fonction du mode et du code opératoire.

4. Processeur selon la revendication 3, caractérisé en ce que les moyens de présentation sont constitués par une première et une deuxième mémoire (15, 16) auxquelles sont rattachés respectivement des circuits d'adressage (17, 18) et une première et une deuxième ligne commune de données (BUSY, BUSX) pour relier les sorties des mémoires aux entrées d'opérande de l'unité.

5. Processeur selon la revendication 4, caractérisé en ce qu'il est prévu une troisième ligne de données (BUSZ) utilisée notamment pour ranger dans les mémoires les données issues notamment de ladite unité.

6. Processeur pour effectuer suivant différents modes le traitement de données selon la revendication 5, caractérisé en ce qu'il fonctionne en "PIPE-LINE", un compteur-programme (52) adressant l'instruction "n + 1" alors que l'instruction "n" est disponible à la sortie de la mémoire-programme, l'unité arithmétique et logique effectuant les calculs définis par l'instruction "n − 1", et le dispositif de multiplication commençant la multiplication demandée par l'instruction "n − p" où "p" est lié au nombre d'étages de l'organe de multiplication.

7. Processeur selon l'une des revendications 1 à 6 comportant des accumulateurs (27) connectés en sortie de l'unité arithmétique et logique, caractérisé en ce que ces accumulateurs ont une capacité de données dépendant des différents modes.

8. Processeur selon l'une des revendications 1 à 7 comportant une mémoire (25) de type première donnée entrée, première donnée sortie (FIFO 25) connectée en sortie de l'unité arithmétique et logique.

9. Processeur selon l'une des revendications 2 à 8, caractérisé en ce que dans le dispositif de multiplication il est prévu des séries de registres (350—354, 360—364) fournissant des opérandes nouveaux à l'organe de multiplication ou des opérandes anciens, ou alors un opérande nouveau et un opérande ancien, sous la dépendance du circuit de gestion de commande de multiplication (280).

10. Processeur selon l'une·des revendications 1 à 9, caractérisé en ce qu'il est prévu un ensemble d'accumulateurs (27) muni d'une entrée connectée en sortie de ladite unité et une ligne de connexion directe pour connecter la sortie dudit ensemble à l'une des entrées d'opérande de ladite unité.

11. Processeur selon la revendication 10, caractérisé en ce que la ligne de connexion directe est connectée à la première entrée d'opérande de l'unité arithmétiquee et logique par l'intermédiaire d'un circuit multiplexeur (21) dont une autre entrée est connectée à la première ligne commune de données (BUSY), tandis que la seconde entrée d'opérande de l'unité arithmétique et logique est connectée à la deuxième ligne commune de données (BUSX), par l'intermédiaire d'un circuit multiplexeur (255) dont une autre entrée est connectée à la sortie du dispositif de multiplication (250).

## Patentansprüche

1. Prozessor zur Datenverarbeitung in verschiedenen Betriebsarten mit

— einem Programmspeicher (50) zum Enthalten eines Befehlssatzes, zu dem Betriebsanweisungsbefehle gehören und der einen Platz für einen Funktionscode enthält,

— einem Befehlsregister (54) zum Enthalten der aus dem Programmspeicher abgeleiteten Befehle,

— einer an einen Ausgang des Befehlsregisters angeschlossenen gemeinsamen Befehlsleitung (BUSI),

— einer ALU-Einheit mit zwei Operandeneingängen (A, B), einem Steuereingang (alu) zum Empfangen von Steuerwörtern, insbesondere von einem ersten Steuerwort entsprechend einer an seinen Eingängen ausgeführten Operandenaddition und von einem zweiten Steuerwort entsprechend einer an seinen Eingängen ausgeführten Operandensubstraktion,

EP 0 173 383 B1

— einer Betriebsschaltung (62), die zum Detektieren der Betriebsart-Anweisungsbefehle und zum Erzeugen von Betriebsartsignalen (MOD) an die gemeinsame Befehlsleitung angeschlossen ist,

— einer Taktgeberschaltung (60) zum Erzeugen von von Betriebsartsignalen abhängigen Verarbeitungsphasensignalen (Ø1, Ø2, Ø3, Ø4), damit die folgende Datenverarbeitung in der zuvor angewiesenen Betriebsart erfolgt,

— einer Steuer- und Halte-Überwachungsschaltung (70) zum Ansteuern des Steuereingangs (alu) der Einheit mit Steuerwörtern in Abhängigkeit von den Funktionscoden und von der angewiesenen Betriebsart, dadurch gekennzeichnet, daß ein Funktionscode (ADDC) zum Durchführung der Addition in komplexer Betriebsart vorgesehen ist, wobei die Addition gemeinsam ist für zwei aus einem Realteil Re(a), Re(B) . . . und einem Idealteil Im(A), Im(B) . . . gebildete Daten A und B, um einen Realteil Re(a) + Re(B) und einen Idealteil Im (A) − Im(B) zu bilden, und daß die Überwachungsschaltung (70, 72) vom gemeinsamen Additionscode (ADDC) aktivierte Mittel zum Erzeugen eines der ersten und zweiten Steuerwörter in einer Bearbeitungsphase und eines anderen der ersten und zweiten Steuerwörtern in einer anderen Phase enthält.

2. Prozessor nach Anspruch 1, dadurch gekennzeichnet, daß ebenfalls vorgesehen sind:

— ein Vervielfacher (250) mit zwei Multiplikandeneingängen (252, 253), der aus einem Vervielfachungselement (260) und aus einem Addier/Subtrahierelement (326) zum Kombinieren der vom Vervielfachungselement gelieferten Ergebnisse besteht, und

— eine Vervielfachungssteuer-Überwachungsschaltung (380) zum Liefern der Vervielfachungssteuerwörter, die insbesondere die Addier- oder Subtrahierfunktion des Addier/Subtrahierelements bestimmt.

3. Prozessor nach einem der Ansprüche 1 und 2, dadurch gekennzeichnet, daß im Prozessor Operandendarstellungsmittel (15, 16) zur Darstellung von Daten abhängig von der Betriebsart und vom Betriebscode an den Operanden- und Multiplikandeneingängen vorgesehen sind.

4. Prozessor nach Anspruch 3, dadurch gekennzeichnet, daß die Darstellungsmittel aus einem ersten und einem zweiten Speicher (15, 16) bestehen, an die Adressierschaltungen (17, 18) bzw. eine erste und eine zweite gemeinsame Datenleitung (BUSY, BUSX) zum Verbindungen der Ausgänge der Speicher mit den Operandeneingängen der Einheit angeschlossen sind.

5. Prozessor nach Anspruch 4, dadurch gekennzeichnet, daß eine dritte Datenleitung (BUSZ) insbesondere zum Einschreiben der insbesondere von der Einheit ausgegebenen Daten in die Speicher vorgesehen ist.

6. Prozessor zum Durchführen der Datenverarbeitung nach verschiedenen Betriebsarten gemäß Anspruch 5, dadurch gekennzeichnet, daß ein in "PIPE-LINE" arbeitender Programmzähler (52) den Befehl "n + 1" adressiert, wenn der Befehl "n" am Ausgang des Programmspeichers verfügbar ist, wobei die ALU-Einheit die vom Befehl "n − 1" bestimmten Berechnungen ausführt, und der Vervielfacher die vom Befehl "n − p" angegebene Vervielfachung startet, worin "p" mit der Stufenanzahl des Vervielfachungselements verknüpft ist.

7. Prozessor nach einem der Ansprüche 1 bis 6, mit Akkumulatoren (27), die mit ihrem Ausgang an die ALU-Einheit angeschlossen sind, dadurch gekennzeichnet, daß diese Akkumulatoren eine von den verschiedenen Betriebsarten abhängige Datenkapazität besitzen.

8. Prozessor nach einem der Ansprüche 1 bis 7, mit einem Speicher (25) vom FIFO-Typ, dessen ausgang mit der ALU-Einheit verbunden ist.

9. Prozessor nach einem der Ansprüche 2 und 8, dadurch gekennzeichnet, daß im Vervielfacher Registerreihen (350—354, 360—364) vorgesehen sind, die dem Vervielfachungselement mit neuen oder mit alten Operanden oder mit einem neuen und einem alten Operanden in Abhängigkeit von der Vervielfachungssteuer-Überwachungsschaltung (280) beliefert.

10. Prozessor nach einem der Ansprüche 1 und 9, dadurch gekennzeichnet, daß eine Akkumulatoreneinheit (27) mit einem Eingang, der mit dem Ausgang der Einheit verbunden ist, und eine direkte Verbindungsleitung zum Anschließen des Ausgangs der Akkumulatoreneinheit an einen der Operandeneingänge der ALU-Einheit vorgesehen sind.

11. Prozessor nach Anspruch 10, dadurch gekennzeichnet, daß die direkte Verbindungsleitung über eine Multiplexchaltung (21) an den ersten Operandeneingang der ALU-Einheit angeschlossen ist, wobei ein anderer Eingang der Multiplexschaltung an die erste gemeinsame Datenleitung (BUSY) angeschlossen ist, während der zweite Operandeneingang der ALU-Einheit mit der zweiten gemeinsamen Datenleitung (BUSX) über eine Multiplexschaltung (255) verbunden ist, von der ein anderer Eingang an den Ausgang des Vervielfachers (250) angeschlossen ist.

## Claims

1. Processor for carrying out the data processing in various modes, the processor comprising:

— a program memory (50) for containing a set of instructions among which there are mode declaration instructions and in which a location is provided for an operation code,

— an instruction register (54) for containing the instructions from the program memory,

— a common instruction line (BUSI) connected to the output of the instruction register,

— an arithmetic and logic unit having two operand inputs (A, B), a control input (alu) for receiving

21

control words specifically a first control word corresponding with an operand addition at its inputs and a second control word corresponding with an operand substration at its inputs,

— a mode circuit (62) connected to the common instruction line for detecting the mode declaration instructions and generating mode signals (MOD),

— a clock circuit (60) for generating phase signals (Ø1, Ø2, Ø3, Ø4) to be processed as a function of mode signals, so that the next data processing is effected in the mode set out previously,

— a control code management and borrow circuit (70) for supplying control words to the control input (alu) of the unit as a function of the operational codes and the declared mode, characterized in that there is provided an operation code (ADDC) for carrying out in the complex mode the conjugate adding operation with respect to two data A and B, formed by a real part Re(A), Re(B) . . . and an imaginary part Im(A), Im(B) . . . , to produce a real part:

$$Re(A) + Re(B)$$

and an imaginary part:

$$Im(A) - Im(B)$$

and in that the management circuit (70, 72) comprises means triggered by the conjugate adding operation code (ADDC) to generate in a processing phase one of the first and second control words and in a further phase the other one of the first and second control words.

2. Processor as claimed in claim 1, characterized in that it further comprises:

— a multiplication device (250) having two multiplicand inputs (252, 253), constituted by a multiplication unit (260), an addition-subtraction unit (326) for combining the results produced by the multiplication unit,

— a multiplication control management circuit (380) for producing multiplication control words, which specifically determines the adding or substracting function of said addition-subtraction unit.

3. Processor as claimed in either one of the claims 1 and 2, characterized in that it comprises operand presentation means (15, 16) to present at the operand and multiplicand inputs data as a function of the mode and the operation code.

4. Processor as claimed in claim 3, characterized in that the presentation means are constituted by first and second memories (15, 16) to which are connected addressing circuits (17, 18) and first and second common data lines (BUSY, BUSX) respectively, to connect the memory outputs to the operand inputs of the unit.

5. Processor as claimed in claim 4, characterized in that there is provided a third data linee (BUSZ) specifically used for arranging in the memories the data specifically coming from said unit.

6. Processor for carrying out, in different modes, the data processing as claimed in claim 5, characterized in that it operates according to the "PIPE-LINE" method, a program counter (52) addressing the instruction ((n + 1" when the instruction "n" is available at the output of the program memory, the arithmetic and logic unit performing the calculations defined by the instruction "n − 1", and the multiplication device starting the multiplication desired by the instruction "n − p", where "p" is coupled with the number of stages of the multiplication unit.

7. Processor as claimed in one of the claims 1 to 6 comprising accumulators (27) connected to the output of the arithmetic and logic unit, characterized in that these accumulators have a data capacity depending on the different modes.

8. Processor as claimed in any one of the claims 1 to 7 comprising a memory (25) of the First In First Out type (FIFO 25) connected to the output of the arithmetic and logic unit.

9. Processor as claimed in any one of the claims 2 to 8, characterized in that in the multiplication device sets of registers (350—354, 360—364) are provided, supplying to the multiplication unit new operands or old operands, or new and old alternately, in dependence on the multiplication control management circuit (280).

10. Processor as claimed in any one of the claims 1 to 9, characterized in that a set of accumulators (27) is provided, having an input connected to the output of said unit and a direct connecting line for connecting the output of said set to one of the operand inputs of said unit.

11. Processor as claimed in claim 10, characterized in that the direct connecting line is connected to the first operand input of the arithmetic and logic unit by means of a multiplex circuit (21) whose further input is connected to the first common data line (BUSY), whereas the second operand input of the arithmetic and logic unit is connected to the second common data line (BUSX) by means of a multiplex circuit (255) whose further input is connected to the output of the multiplication device (250).

FIG.1

EP 0 173 383 B1

I

CI

MOD

"INI"

FIG.2

CI1

CI2

CI3,
CI4

CODALU

FIG.5

CI1

CMU

"OPIN"

FIG.11

2

FIG.3a

FIG.3b

FIG.4

FIG.6

4

FIG.7

FIG.8

FIG.9

FIG.10

FIG.12

FIG.13

BUSI JJn JJn+1 JJn+2

BUSX P Q P' Q'

BUSY R S R' S'

(352) P P'

(362) R R'

(354) P P'

(364) R R'

(350) Q Q'

(360) S S'

(270) MUX1 "a" "b"

(272) MUX2 "b" "a" "b" "a"

P 31..16 P.R Q.S Q.R P.S P'.R'

(324) P.R Q'.R P'.R'

(326) — + —

(328) P.R − Q.S P'.R' − Q'.S'

(330) j.(Q.R + P.S)

(254) P.R − Q.S j (Q.R + P.S) P'.R' − Q'.S'

H

Ø Ø1 Ø2 Ø3 Ø0 Ø1 Ø2 Ø3 Ø0 Ø1 Ø2 Ø3 Ø0 Ø1 Ø2 Ø3

t

tt10 tt11 tt12 tt13 TT/2 tt15 tt25 tt26 tt27 tt28 tt29

FIG.14

EP 0 173 383 B1

11

FIG.15